# DEMANDE DE BREVET EUROPEEN

(11) **EP 3 800 796 A1**
(43) Date de publication de la demande: **07.04.2021**
(21) Numéro de dépôt: 20199736.8
(22) Date de dépôt: 02.10.2020
(51) Int. Cl.: H04B 5/00, G06F 1/324, G06F 1/3296, G06K 19/07, G06Q 20/34

(54) **PROCÉDÉ DE COMMUNICATION ENTRE CIRCUITS**

(30) Priorité: 04.10.2019 FR 1911040
(71) Demandeur: STMicroelectronics (Rousset) SAS, 13790 Rousset (FR)
(72) Inventeur: MERCIER, Julien, 13105 MIMET (FR)
(74) Mandataire: Cabinet Beaumont

(57) **Abrégé**

La présente description concerne un procédé de communication entre un premier élément (21) et au moins un deuxième élément (22) d'un même dispositif (2), dans lequel : le premier élément transmet au deuxième élément une première information représentative d'une énergie fournie par un champ électromagnétique (EMF) alimentant le dispositif ; et le deuxième élément adapte sa fréquence de fonctionnement en fonction de la première information.

## Description

### Domaine technique

La présente description concerne de façon générale les circuits électroniques et, plus particulièrement, les systèmes dans lesquels deux circuits sont susceptibles de communiquer entre eux.

### Technique antérieure

On connaît de nombreuses applications dans lesquelles un dispositif électronique est dépourvu d'alimentation interne, de sorte que des circuits embarqués sur ce dispositif ne peuvent être activés que lorsqu'une énergie suffisante leur est fournie, de façon externe, par un autre dispositif. C'est notamment le cas de certaines cartes sans contact qui puisent, généralement d'un champ électromagnétique émis par un lecteur situé à portée, l'énergie électrique nécessaire à l'alimentation de leurs circuits. Ces circuits disposent, le cas échéant, d'une puissance électrique limitée qu'il convient d'exploiter au mieux pour garantir un fonctionnement optimal du dispositif dont ils font partie.

Deux circuits d'un tel dispositif peuvent parfois, à condition d'être convenablement alimentés et après avoir été activés, communiquer entre eux. On cherche alors à faire en sorte que la liaison de communication comporte un nombre de conducteurs le plus faible possible, afin d'occuper un espace restreint dans ou sur le dispositif.

### Résumé de l'invention

Il existe un besoin d'optimiser la puissance consommée par deux circuits susceptibles de communiquer entre eux.

Selon un aspect, on prévoit de limiter le nombre de conducteurs d'une liaison utilisée pour cette communication.

Selon un autre aspect, on prévoit de transmettre des informations relatives à des contraintes extérieures aux circuits.

Un mode de réalisation pallie tout ou partie des inconvénients des procédés de communication connus.

Un mode de réalisation prévoit un procédé de communication entre un premier élément et un deuxième élément, dans lequel :
un premier canal véhicule un signal de synchronisation ;
deux deuxièmes canaux véhiculent deux signaux de données ; et
deux troisièmes canaux véhiculent deux signaux adaptés à commander une sortie d'un mode de veille respectivement du premier élément et du deuxième élément,
les cinq canaux, constitués des premier, deuxièmes et troisièmes canaux, étant transmis sur trois ou quatre conducteurs.

Selon un mode de réalisation, les signaux véhiculés par les troisièmes canaux sont en outre adaptés à commander une mise en mode de veille respectivement du premier élément et du deuxième élément.

Selon un mode de réalisation, les conducteurs relient, de préférence connectent, respectivement des bornes d'entrées-sorties du premier élément à des bornes d'entrées-sorties du deuxième élément.

Selon un mode de réalisation, le premier élément alimente électriquement le deuxième élément.

Selon un mode de réalisation, deux conducteurs additionnels relient, de préférence connectent, le premier élément au deuxième élément et sont respectivement portés, par le premier élément, à un potentiel électrique d'alimentation et à un potentiel électrique de référence.

Selon un mode de réalisation, le premier élément est mis en mode de veille après avoir transmis une commande au deuxième élément.

Selon un mode de réalisation, le deuxième élément est mis en mode de veille après avoir transmis une réponse au premier élément.

Selon un mode de réalisation, le premier élément et le deuxième élément font partie d'un même dispositif.

Selon un mode de réalisation, le premier élément commande la mise en mode de veille du deuxième élément pour communiquer avec l'extérieur du dispositif.

Selon un mode de réalisation, le dispositif communique avec l'extérieur par un signal radiofréquence.

Selon un mode de réalisation, le premier élément est un circuit électronique sécurisé.

Selon un mode de réalisation, le deuxième élément est un microcontrôleur.

Selon un mode de réalisation, le deuxième élément est relié, de préférence connecté, à un capteur d'empreintes digitales.

Selon un mode de réalisation, le capteur d'empreintes digitales fait partie du dispositif.

Selon un mode de réalisation, le premier élément alimente électriquement le capteur d'empreintes digitales.

Un mode de réalisation prévoit un procédé de communication entre un premier élément et au moins un deuxième élément d'un même dispositif, dans lequel :
le premier élément transmet au deuxième élément une première information représentative d'une énergie fournie par un champ électromagnétique alimentant le dispositif ; et
le deuxième élément adapte sa fréquence de fonctionnement en fonction de la première information.

Selon un mode de réalisation, la première information est une intensité d'un courant électrique d'alimentation du dispositif à partir du champ électromagnétique.

Selon un mode de réalisation, la première information est évaluée par le premier élément.

Selon un mode de réalisation :
le premier élément transmet au deuxième élément une deuxième information représentative d'une durée restante (time budget) d'activité du dispositif ; et
le deuxième élément exécute un nombre d'opérations en fonction de la deuxième information.

Selon un mode de réalisation, la deuxième information est évaluée par le premier élément.

Selon un mode de réalisation :
le premier élément transmet au deuxième élément une troisième information représentative d'une tension d'alimentation du dispositif ; et
le deuxième élément adapte une configuration interne en fonction de cette troisième information.

Selon un mode de réalisation, la troisième information est évaluée par le premier élément.

Selon un mode de réalisation, le premier élément alimente le deuxième élément.

Selon un mode de réalisation, le premier élément est un circuit électronique sécurisé.

Selon un mode de réalisation, le deuxième élément est un microcontrôleur.

Selon un mode de réalisation, le deuxième élément est relié, de préférence connecté, à un capteur d'empreintes digitales.

Selon un mode de réalisation, le capteur d'empreintes digitales fait partie du dispositif.

Selon un mode de réalisation, le premier élément alimente le capteur d'empreintes digitales.

Selon un mode de réalisation, le dispositif communique avec l'extérieur sans contact, par un signal radiofréquence, ou avec contact.

Un mode de réalisation prévoit un dispositif adapté à mettre en œuvre le procédé tel que décrit.

Un mode de réalisation prévoit une carte de paiement adaptée à mettre en œuvre le procédé tel que décrit.

### Brève description des dessins

Ces caractéristiques et avantages, ainsi que d'autres, seront exposés en détail dans la description suivante de modes de réalisation et modes de mise en œuvre particuliers faite à titre non limitatif en relation avec les figures jointes parmi lesquelles :
La figure 1 représente, de façon schématique et sous forme de blocs, un mode de réalisation d'un système de communication en champ proche ;
La figure 2 représente, de façon schématique et sous forme de blocs, un mode de réalisation de circuits d'un dispositif du système communiquant entre eux par une liaison filaire ;
La figure 3 est un diagramme d'enchaînement de phases d'un mode de mise en œuvre d'un procédé de communication ;
La figure 4 représente, par des vues A et B, des chronogrammes de phases du mode de mise en œuvre du procédé de communication ;
La figure 5 représente, par des vues A et B, des chronogrammes d'autres phases du mode de mise en œuvre du procédé de communication ;
La figure 6 est un chronogramme d'encore une autre phase du mode de mise en œuvre du procédé de communication ;
La figure 7 est un chronogramme d'encore une autre phase du mode de mise en œuvre du procédé de communication ; et
La figure 8 représente, par des vues A et B, des diagrammes d'enchaînement d'autres étapes du mode de mise en œuvre du procédé de communication.

### Description des modes de réalisation

De mêmes éléments ont été désignés par de mêmes références dans les différentes figures. En particulier, les éléments structurels et/ou fonctionnels communs aux différents modes de réalisation et modes de mise en œuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en œuvre décrits ont été représentés et sont détaillés. En particulier, la génération des signaux et données échangés ainsi que leur interprétation n'ont pas été détaillées, les modes de réalisation et modes de mise en œuvre décrits étant compatibles avec les techniques usuelles de génération et d'interprétation de ces signaux et données.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures.

Sauf précision contraire, les expressions "environ", "approximativement", "sensiblement", et "de l'ordre de" signifient à 10 % près, de préférence à 5 % près.

Dans la description qui suit, on appelle « signal binaire » un signal qui alterne entre un premier état constant, par exemple un état bas, noté « 0 », et un deuxième état constant, par exemple un état haut, noté « 1 ». Les états 0 et 1 de signaux binaires différents d'un même circuit électronique peuvent être de niveaux haut et bas différents. En pratique, les signaux binaires peuvent correspondre à des tensions ou à des courants qui peuvent ne pas être parfaitement constants à l'état haut ou bas.

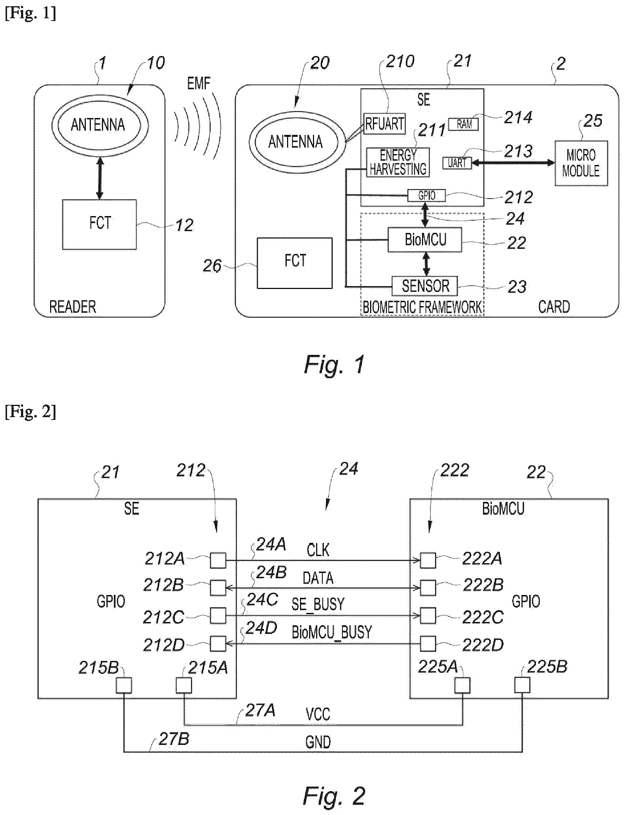

La figure 1 représente, de façon schématique et sous forme de blocs, un mode de réalisation d'un système de communication en champ proche (Near-Field Communication - NFC).

En figure 1, un premier dispositif 1 (READER) de communication en champ proche communique avec un deuxième dispositif 2 (CARD) de communication en champ proche. Selon ce mode de réalisation, le premier dispositif 1 de communication en champ proche est, par exemple, un lecteur ou terminal 1 de paiement sans contact ou un téléphone portable ayant cette fonction. Le deuxième dispositif 2 de communication en champ proche est, par exemple, une carte bancaire 2 de paiement sans contact.

Le terminal 1 comporte une antenne 10 (ANTENNA). Cette antenne 10 est en particulier adaptée à émettre un champ électromagnétique (EMF) généré par un ou plusieurs circuits électroniques du terminal 1, ces circuits électroniques étant symbolisés, en figure 1, par un unique bloc fonctionnel 12 (FCT). Dans un cas où la carte bancaire 2 est située à portée du terminal 1, le champ électromagnétique émis par ce terminal 1 peut alors être capté par une antenne 20 (ANTENNA) de cette carte 2. On dit alors que le terminal 1 fonctionne en mode « lecteur » tandis que la carte 2 fonctionne en mode « carte ».

La carte 2 comporte, outre l'antenne 20, un premier élément 21 (SE) ou circuit 21 et un deuxième élément 22 (BioMCU) ou circuit 22. Le premier élément 21 est, de préférence, un composant électronique sécurisé. Selon ce mode de réalisation, dans lequel la carte 2 est une carte bancaire de paiement sans contact, le premier élément 21 peut être un microcontrôleur 21 destiné à effectuer des tâches sécurisées, par exemple des opérations associées à des transactions bancaires entre la carte 2 et le terminal 1. Le deuxième élément 22 est destiné à traiter des données biométriques acquises par un ou plusieurs capteurs 23 (SENSOR). Le deuxième élément 22 est, de préférence, un microcontrôleur (Microcontroller Unit - MCU). Le deuxième élément 22 peut être un microcontrôleur générique ou un microcontrôleur biométrique, autrement dit un composant électronique dédié au traitement de données biométriques.

Selon un mode de réalisation préféré, le microcontrôleur 22 se distingue du microcontrôleur 21 principalement en ce que ce microcontrôleur 22 :
exécute, pour une consommation électrique sensiblement égale à celle du microcontrôleur 21, davantage de millions d'instructions par seconde (million instructions per second - MIPS), en particulier des instructions liées à des opérations de traitement d'images ;
est capable de gérer un ou plusieurs modes dans lesquels sa consommation électrique est fortement réduite, de préférence de plusieurs ordres de grandeur par rapport à un mode de fonctionnement nominal, par exemple un mode basse consommation à environ 50 µA et un mode nominal à 10 mA ;
embarque une quantité de mémoire RAM plus importante que celle du microcontrôleur 21 (par exemple 100 kB pour le microcontrôleur 22 contre 16 kB pour le microcontrôleur 21) pour exécuter des algorithmes biométriques ; et
intègre plusieurs interfaces, permettant notamment à ce microcontrôleur 22 de communiquer avec le premier microcontrôleur 21 et avec le capteur 23.

En figure 1, on a représenté un seul capteur 23 (SENSOR) associé au deuxième élément 22. Ce capteur 23 est, par exemple, un capteur d'empreintes digitales accessible depuis une face avant de la carte bancaire 2. Le deuxième élément 22 est alors, par exemple, un microcontrôleur pilotant l'acquisition, par le capteur 23, d'images correspondant à des empreintes digitales d'un utilisateur de la carte 2 et qui exécute une ou plusieurs applications d'analyse de ces images. Le deuxième élément 22 et le capteur 23 d'empreintes digitales forment conjointement un environnement biométrique (BIOMETRIC FRAMEWORK).

Selon ce mode de réalisation, le premier élément 21 comporte en particulier :
un premier émetteur-récepteur, par exemple de type asynchrone universel, de signaux radiofréquence 210 (Radio-Frequency Universal Asynchronous Receiver Transmitter - RFUART) ;
un module de récupération d'énergie 211 (ENERGY HARVESTING) ;
des bornes ou plots d'entrées-sorties (General Purpose Input-Output), symbolisés par un unique bloc 212 (GPIO) ;
un deuxième émetteur-récepteur, par exemple de type asynchrone universel, 213 (Universal Asynchronous Receiver Transmitter - UART) ; et
un module mémoire 214 (RAM), par exemple une mémoire de stockage volatil.

En figure 1, le premier émetteur-récepteur 210 est relié, de préférence connecté, à l'antenne 20 de la carte 2. Cet émetteur-récepteur permet notamment à la carte 2 de recevoir les signaux radiofréquence émis par le terminal 1 lorsque cette carte 2 est située à portée de ce terminal 1. La carte 2 communique ainsi avec l'extérieur par un signal radiofréquence.

Le module 211 de récupération d'énergie est en particulier adapté à puiser de l'énergie électrique sur le champ électromagnétique émis par le terminal 1. Ce module 211 a notamment pour fonction d'alimenter électriquement le premier élément 21. Le premier élément 21 alimente électriquement le deuxième élément 22 et le capteur biométrique 23 de la carte 2.

Les bornes 212 d'entrées-sorties du premier élément 21 sont reliées, de préférence connectées, au deuxième élément 22. Ces bornes 212 peuvent être configurées soit pour jouer le rôle d'une entrée, autrement dit pour recevoir un signal, soit pour jouer le rôle d'une sortie, autrement dit pour transmettre un signal. Les bornes 212 permettent des échanges de données bidirectionnels entre le premier élément 21 et le deuxième élément 22 par l'intermédiaire d'une liaison 24 symbolisée, en figure 1, par une double flèche.

Toujours en figure 1, le deuxième émetteur-récepteur 213 du premier élément 21 est relié, de préférence connecté, à un module 25 (MICRO MODULE) de la carte 2. Ce module 25 permet à la carte 2 de communiquer avec le terminal 1 dans un cas où cette carte 2 est physiquement reliée ou connectée à ce terminal 1. Ce cas correspond à une situation où la carte 2 est insérée dans le terminal 1 afin de procéder à un paiement avec contact. Dans une telle situation, l'échange de données et l'alimentation de la carte 2 passent tous deux par des pistes conductrices situées en face avant de cette carte 2.

La carte 2 peut également comporter un ou plusieurs autres éléments ou circuits électroniques. Ces éléments ou circuits électroniques, dont le fonctionnement ne sera pas détaillé dans la description ci-dessous, sont symbolisés, en figure 1, par un unique bloc fonctionnel 26 (FCT).

Il est à noter que la représentation schématique de la figure 1 n'est pas censée reproduire fidèlement un agencement physique réel des dispositifs 1 et 2. En particulier, les divers éléments qui composent le terminal 1 et la carte 2 ne sont pas représentés à l'échelle et peuvent, en pratique, être agencés de façon différente de celle qui est illustrée en figure 1.

La figure 2 représente, de façon schématique et sous forme de blocs, un mode de réalisation des circuits 21 et 22 du dispositif 2 du système. Ces circuits 21 et 22 communiquent entre eux par la liaison filaire 24.

Selon ce mode de réalisation, le premier circuit 21 comporte quatre bornes 212 d'entrées-sorties (GPIO), par exemple universelles :
une première borne 212A reliée, de préférence connectée, à un premier conducteur ou fil 24A destiné à transmettre un premier canal véhiculant un signal (CLK) de synchronisation ou d'horloge ;
une deuxième borne 212B reliée, de préférence connectée, à un deuxième conducteur ou fil 24B destiné à transmettre deux deuxièmes canaux véhiculant respectivement deux signaux (DATA) de données ;
une troisième borne 212C reliée, de préférence connectée, à un troisième conducteur ou fil 24C destiné à transmettre un troisième canal véhiculant un troisième signal (SE_BUSY) ; et
une quatrième borne 212D reliée, de préférence connectée, à un quatrième conducteur ou fil 24D destiné à transmettre un quatrième canal véhiculant un quatrième signal (BioMCU_BUSY).

De façon analogue, le deuxième circuit 22 comporte quatre bornes 222 d'entrées-sorties universelles (GPIO) :
une première borne 222A reliée, de préférence connectée, au premier conducteur 24A ;
une deuxième borne 222B reliée, de préférence connectée, au deuxième conducteur 24B ;
une troisième borne 222C reliée, de préférence connectée, au troisième conducteur 24C ; et
une quatrième borne 222D reliée, de préférence connectée, au quatrième conducteur 24D.

Selon ce mode de réalisation, le premier circuit 21 comporte en outre :
une cinquième borne 215A reliée, de préférence connectée, à un cinquième conducteur ou fil 27A porté à un potentiel électrique (VCC) permettant d'alimenter le deuxième circuit 22 à partir du premier circuit 21 ; et
une sixième borne 215B reliée, de préférence connectée, à un sixième conducteur ou fil 27B porté à un potentiel de référence, par exemple la masse (GND).

De façon analogue, le deuxième circuit 22 comporte en outre :
une cinquième borne 225A reliée, de préférence connectée, au cinquième conducteur 27A ; et
une sixième borne 225B reliée, de préférence connectée, au sixième conducteur 27B.

Selon un mode de réalisation, le capteur d'empreintes digitales 23 (figure 1) comporte deux bornes similaires aux bornes 225A et 225B du deuxième circuit 22. Ces deux bornes du capteur 23 sont alors respectivement reliées, de préférence connectées, aux conducteurs 27A et 27B. Le capteur d'empreintes digitales 23 est ainsi alimenté électriquement par le premier circuit 21.

En général, un dispositif maître (Master) relié à un dispositif esclave (Slave) par un bus de données série synchrone (Sérial Peripheral Interface - SPI) communique selon un schéma maître-esclave, dans lequel le dispositif maître contrôle la communication. En pratique, un tel bus de données série comporte typiquement quatre conducteurs, véhiculant chacun un signal de manière unidirectionnelle. Autrement dit, chaque signal est transmis soit depuis le maître vers l'esclave, soit depuis l'esclave vers le maître.

Traditionnellement, un bus de données série synchrone entre un dispositif maître et un dispositif esclave comporte plus précisément :
un premier conducteur véhiculant un signal d'horloge, généré par le dispositif maître ;
un deuxième conducteur véhiculant un premier signal de données (Master Output, Slave Input - MOSI), généré par le dispositif maître à destination du dispositif esclave ;
un troisième conducteur véhiculant un deuxième signal de données (Master Input, Slave Output - MISO), généré par le dispositif esclave à destination du dispositif maître ; et
un quatrième conducteur véhiculant un signal de sélection du dispositif esclave, généré par le dispositif maître.

Contrairement au cas classique exposé ci-dessus, le premier circuit 21 et le deuxième circuit 22 du mode de réalisation de la figure 2 communiquent ici entre eux par un bus de données SPI constitué uniquement de deux conducteurs, les conducteurs 24A et 24B de la liaison 24, selon ce mode de réalisation. Le premier circuit 21 constitue un circuit maître, tandis que le deuxième circuit 22 constitue un circuit esclave. Les échanges de données entre le premier circuit 21 et le deuxième circuit 22 ont lieu à l'initiative du premier circuit 21.

On tire ici profit du fait que les circuits 21 et 22 sont les deux seuls circuits que l'on souhaite faire communiquer entre eux. Le signal de sélection usuel n'est donc pas nécessaire.

Le premier conducteur 24A véhicule ici le signal de synchronisation CLK, destiné à cadencer des échanges de données entre le circuit maître 21 et le circuit esclave 22. Le deuxième conducteur 24B véhicule le signal de données DATA, représentatif des données échangées entre le circuit maître 21 et le circuit esclave 22. Plus précisément, toujours selon ce mode de réalisation, le deuxième conducteur 24B est adapté à véhiculer tantôt le signal de données MOSI, émis par le circuit maître 21 à destination du circuit esclave 22, et tantôt le signal de données MISO, émis par le circuit esclave 22 à destination du circuit maître 21. Le signal de données DATA correspond ainsi soit au signal MOSI soit au signal MISO, en fonction du sens dans lequel sont échangées les données.

On qualifie une telle communication, entre le premier circuit 21 et le deuxième circuit 22, de communication en mode semi-duplex bidirectionnel (half-duplex bidirectionnal), ou « SPI IP ». Ce mode SPI IP présente l'avantage de réduire le nombre de bornes ou plots mis en jeu pour la communication entre les circuits 21 et 22, notamment du fait de la transmission alternative des signaux MOSI et MISO sur le même conducteur 24B. Le mode de réalisation exposé en relation avec la figure 2 permet donc de limiter le nombre d'interfaces matérielles, bornes ou conducteurs, utilisées pour la communication entre ces circuits 21 et 22.

Selon un mode de réalisation préféré, le troisième signal SE_BUSY et le quatrième signal BioMCU_BUSY sont des signaux binaires, évoluant entre un niveau haut et un niveau bas. Ces signaux SE_BUSY et BioMCU_BUSY permettent notamment de synchroniser des échanges de données entre le premier circuit 21 et le deuxième circuit 22.

Les signaux SE_BUSY et BioMCU_BUSY sont adaptés à commander une sortie d'un mode de veille, ou mode basse consommation, du premier circuit 21 et du deuxième circuit 22. Ces signaux SE_BUSY et BioMCU_BUSY sont en outre adaptés à commander une mise en mode de veille de ce premier circuit 21 et de ce deuxième circuit 22. Cela permet d'effectuer une gestion de consommation du deuxième dispositif 2 dont font partie le premier circuit 21 et le deuxième circuit 22. On peut ainsi notamment réduire la consommation électrique du deuxième dispositif 2 par rapport à un dispositif semblable dont les premier et deuxième circuits ne sont pas commutés en mode de veille.

Le premier circuit 21 peut être, par exemple, un microcontrôleur possédant quatre bornes d'entrées-sorties initialement destinées à permettre une communication SPI classique sur quatre fils. Un tel circuit peut avantageusement être reconfiguré pour être rendu compatible avec le procédé de communication exposé dans cette description. On conserve ainsi, pour un nombre de fils inchangé, des fonctionnalités proches de celles d'une communication SPI classique entre un dispositif ou circuit maître et un dispositif ou circuit esclave, tout en ajoutant la possibilité d'échanger les deux signaux SE_BUSY et BioMCU_BUSY entre ces dispositifs ou circuits.

Selon un mode de réalisation préféré, les bornes 212 d'entrées-sorties du premier circuit 21 sont configurées comme suit :
la première borne 212A est configurée comme une sortie, pour transmettre le signal CLK au deuxième circuit 22 ;
la deuxième borne 212B est configurée alternativement comme une entrée, pour recevoir le signal MISO transmis par le deuxième circuit 22, ou comme une sortie, pour transmettre le signal MOSI à destination de ce deuxième circuit 22 ;
la troisième borne 212C est configurée comme une sortie, pour transmettre le signal SE_BUSY au deuxième circuit 22 ; et
la quatrième borne 212D est configurée comme une entrée, pour recevoir le signal BioMCU_BUSY transmis par le deuxième circuit 22.

Toujours selon ce mode de réalisation préféré, les bornes 222 d'entrées-sorties du deuxième circuit 22 sont configurées comme suit :
la première borne 222A est configurée comme une entrée, pour recevoir le signal CLK transmis par le premier circuit 21 ;
la deuxième borne 222B est configurée alternativement comme une entrée, pour recevoir le signal MOSI transmis par le premier circuit 21, ou comme une sortie, pour transmettre le signal MISO à destination de ce premier circuit 21 ;
la troisième borne 222C est configurée comme une entrée, pour recevoir le signal SE_BUSY transmis par le premier circuit 21 ; et
la quatrième borne 222D est configurée comme une sortie, pour transmettre le signal BioMCU_BUSY au premier circuit 21.

En variante, le premier circuit 21 et le deuxième circuit 22 ne comportent chacun que trois bornes d'entrées-sorties, ces bornes étant reliées, de préférence connectées, à trois conducteurs :
un premier conducteur destiné à transmettre deux premiers canaux véhiculant respectivement le signal CLK de synchronisation et le signal SE_BUSY, ces deux signaux n'étant pas transmis simultanément ;
un deuxième conducteur destiné à transmettre deux deuxièmes canaux véhiculant respectivement les signaux MOSI et MISO ; et
un troisième conducteur destiné à transmettre un troisième canal véhiculant le signal BioMCU_BUSY.

Selon cette variante :
les bornes du premier circuit 21 reliées, de préférence connectées, au premier conducteur sont configurées comme des sorties, pour transmettre soit le signal CLK de synchronisation, soit le signal SE_BUSY ; et
les bornes du deuxième circuit 22 reliées, de préférence connectées, à ce premier conducteur sont configurées comme des entrées, pour recevoir soit le signal de synchronisation CLK, soit le signal SE_BUSY.

Un avantage de cette variante est de permettre de n'utiliser que trois conducteurs. Dans une situation où les premier et deuxième circuits 21, 22 comportent chacun quatre bornes, seules trois de ces bornes sont utilisées pour la mise en œuvre du procédé exposé dans cette description. On libère ainsi une borne de chaque circuit et un quatrième conducteur pour réaliser d'autres fonctions.

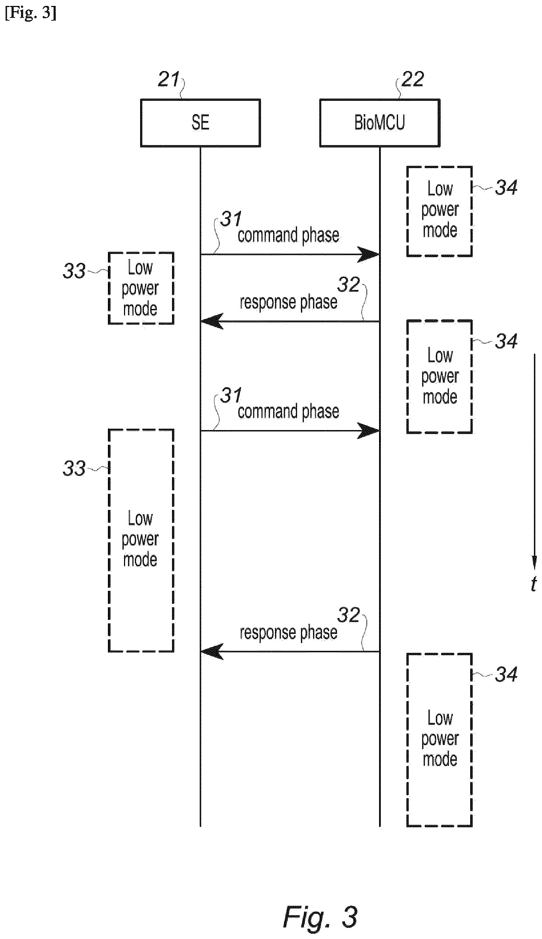

Le rôle des signaux CLK, DATA, SE_BUSY et BioMCU_BUSY est décrit plus en détail ci-dessous dans un mode de mise en œuvre d'un procédé de communication exposé en relation avec les figures 3 à 8.

La figure 3 est un diagramme d'enchaînement de phases d'un mode de mise en œuvre d'un procédé de communication entre le premier circuit 21 et le deuxième circuit 22. En particulier, la figure 3 illustre un déroulement d'étapes ou phases d'une communication entre ces circuits 21 et 22 en fonction du temps (t).

Selon ce mode de mise en œuvre, une communication entre le premier circuit 21, ou circuit maître 21, et le deuxième circuit 22, ou circuit esclave 22, est toujours engagée par le circuit maître 21. En d'autres termes, on suppose que les éléments de l'environnement biométrique du dispositif 2, autrement dit le circuit esclave 22 et le capteur d'empreintes digitales 23, ne déclenchent pas de communications avec le circuit maître 21.

La communication entre le circuit maître 21 (SE) et le circuit esclave 22 (BioMCU) s'effectue selon des phases :
de transmission de commandes, depuis le circuit maître 21 vers le circuit esclave 22, symbolisées en figure 3 par des flèches 31 (command phase) ; et
de transmission de réponses, depuis le circuit esclave 22 vers le circuit maître 21, symbolisées en figure 3 par des flèches 32 (response phase).

Ces phases de transmission de commandes 31 et ces phases de transmission de réponses 32 sont entrecoupées par des périodes durant lesquelles le circuit maître 21 et le circuit esclave 22 sont respectivement commutés dans des modes basse consommation 33 et 34 (Low power mode). Chaque mode basse consommation 33, 34 correspond ici à un mode de veille, c'est-à-dire un mode dans lequel la consommation électrique du circuit 21, 22 est fortement réduite par rapport à une consommation électrique de ce même circuit 21, 22 en fonctionnement nominal. Cette réduction de la consommation électrique consiste, de préférence, à passer d'un mode nominal dans lequel la consommation est d'environ 10 mA à un mode veille dans lequel la consommation est d'environ 500 µA.

Avant la transmission de la première commande 31 par le circuit maître 21 et après la transmission de chaque réponse par le circuit esclave 22, le circuit esclave 22 est placé ou commuté en mode basse consommation 34. De façon analogue, le circuit maître 21 est placé ou commuté en mode basse consommation 33 lorsque le circuit maître 21 est en attente d'une réponse 32 de la part du circuit esclave 22. Chaque circuit 21, 22 sort du mode basse consommation 33, 34 lors de la transmission d'une commande 31 ou d'une réponse 32.

Comme illustré en figure 3, la transmission de chaque réponse 32 peut être séparée de la transmission de la commande associée 31 par une durée plus ou moins importante. Cette durée est notamment fonction d'un nombre d'opérations exécutées par le circuit esclave 22 pour élaborer la réponse à transmettre. Ces opérations correspondent à des instructions ou à des groupes d'instructions de microprocesseur, exécutées par le circuit esclave 22, par exemple des instructions ou groupes d'instructions associées à des traitements d'images. La transmission de chaque commande 31 peut également être séparée de la transmission de la réponse précédente par une durée plus ou moins importante. Cette durée est notamment fonction d'un nombre d'opérations exécutées par le circuit maître 21 pour élaborer la prochaine commande à transmettre. Ces opérations correspondent à des instructions ou à des groupes d'instructions de microprocesseur, exécutées par le circuit maître 21.

Les phases de transmission de commandes 31 et les phases de transmission de réponses 32 se traduisent chacune par un échange, entre les circuits 21 et 22, d'au moins deux trames. Selon que ces phases comportent ou non des données à communiquer, les trames sont, plus précisément, échangées de la manière suivante :
pour une phase de transmission de commande 31 sans échange de données, le circuit maître 21 transmet une trame d'en-tête de commande, puis le circuit esclave 22 transmet une trame d'acquittement ;
pour une phase de transmission de commande 31 avec échange de données, le circuit maître 21 transmet une trame d'en-tête de commande, puis le circuit esclave 22 transmet une trame d'acquittement, ensuite le circuit maître transmet une trame de données de commande et enfin le circuit esclave 22 transmet une autre trame d'acquittement ;
pour une phase de transmission de réponse 32 sans échange de données, le circuit esclave 22 transmet une trame d'en-tête de réponse, puis le circuit maître transmet une trame d'acquittement ; et
pour une phase de transmission de réponse 32 avec échange de données, le circuit esclave 22 transmet une trame d'en-tête de réponse, puis le circuit maître 21 transmet une trame d'acquittement, ensuite le circuit esclave 22 transmet une trame de données de réponse et enfin le circuit maître 21 transmet une autre trame d'acquittement.

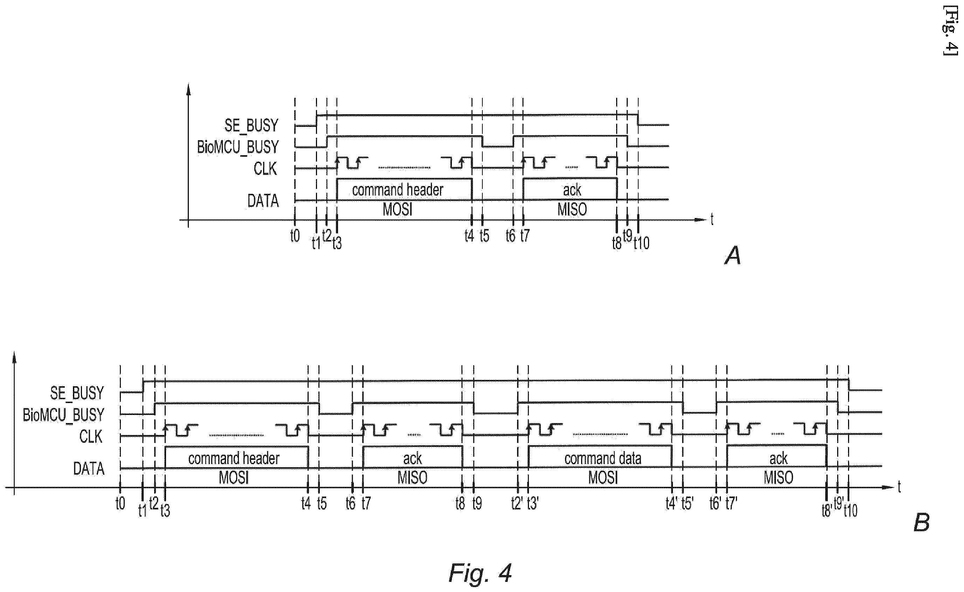

La figure 4 représente, par des vues A et B, des chronogrammes de phases du mode de mise en œuvre du procédé de communication entre les circuits 21 et 22. Ces chronogrammes traduisent en particulier une évolution, en fonction du temps (t), des signaux SE_BUSY, BioMCU_BUSY, CLK et DATA.

Le chronogramme de la vue A correspond à une transmission de commande 31 (figure 3) sans échange de données tandis que le chronogramme de la vue B correspond à une transmission de commande 31 (figure 3) avec échange de données.

En vue A, à un instant initial t0, tous les signaux SE_BUSY, BioMCU_BUSY, CLK et DATA sont à un état ou niveau bas. On suppose :
que le circuit maître 21 n'est pas en mode basse consommation à cet instant t0 ; et
que le circuit esclave 22 est en mode basse consommation à cet instant t0.

À un instant t1, postérieur à l'instant t0, le signal SE_BUSY est commuté de l'état bas vers un état ou niveau haut par le circuit maître 21. Ce passage à l'état haut du signal SE_BUSY a pour but de signifier au circuit esclave 22 que le circuit maître 21 souhaite lui transmettre une commande. Le circuit esclave 22 est alors sorti du mode basse consommation et entame une séquence de réveil durant laquelle ce circuit esclave 22 effectue différentes opérations liées à sa sortie de veille. Le signal BioMCU_BUSY est maintenu à l'état bas durant toutes ces opérations.

À un instant t2, postérieur à l'instant t1, le signal BioMCU_BUSY est commuté de l'état bas vers un état haut par le circuit esclave 22. Ce passage à l'état haut du signal BioMCU_BUSY a pour but de signifier au circuit maître 21 que le circuit esclave 22 est prêt à recevoir une trame d'en-tête de commande. À partir de l'instant t2, le circuit maître 21 et le circuit esclave 22 sont alors tous deux maintenus hors du mode basse consommation jusqu'à la fin de la phase de transmission de commande.

À un instant t3, postérieur à l'instant t2, le circuit maître 21 commence à émettre son signal d'horloge, c'est-à-dire qu'il commute périodiquement le signal CLK entre un état bas et un état haut. La première commutation du signal CLK de l'état bas vers l'état haut marque le début de la transmission de la trame d'en-tête de commande (command header). À chaque commutation vers l'état haut du signal CLK, un nouveau bit de la trame d'en-tête de commande est transmis vers le circuit esclave 22. La trame d'en-tête de commande est transmise depuis le circuit maître 21 vers le circuit esclave 22. La transmission de cette trame d'en-tête de commande correspond donc, comme exposé en relation avec la figure 2, à la transmission du signal MOSI sur le deuxième conducteur 24B de la liaison 24.

À un instant t4, postérieur à l'instant t3, le circuit maître 21 cesse d'émettre son signal d'horloge CLK en ramenant ce signal CLK à l'état bas. Cette dernière commutation du signal CLK de l'état haut vers l'état bas marque la fin de la transmission de la trame d'en-tête de commande.

À un instant t5, postérieur à l'instant t4, le signal BioMCU_BUSY est commuté de l'état haut vers l'état bas par le circuit esclave 22. Ce passage à l'état bas du signal BioMCU_BUSY a pour but de signifier au circuit maître 21 que le circuit esclave 22 est occupé à exécuter des opérations lui permettant de générer la trame d'acquittement.

À un instant t6, postérieur à l'instant t5, le signal BioMCU_BUSY est commuté de l'état bas vers l'état haut par le circuit esclave 22. Ce passage à l'état haut du signal BioMCU_BUSY a pour but de signifier au circuit maître 21 que le circuit esclave 22 est prêt à transmettre la trame d'acquittement, en réponse à la trame d'en-tête de commande précédemment reçue.

À un instant t7, postérieur à l'instant t6, le circuit maître 21 commence à émettre son signal d'horloge. La première commutation du signal CLK de l'état bas vers l'état haut marque le début de la transmission de la trame d'acquittement (ack). À chaque commutation vers l'état haut du signal CLK, un nouveau bit de la trame d'acquittement est transmis vers le circuit maître 21. La trame d'acquittement est transmise depuis le circuit esclave 22 vers le circuit maître 21. La transmission de cette trame d'acquittement correspond donc, comme exposé en relation avec la figure 2, à la transmission du signal MISO sur le deuxième conducteur 24B de la liaison 24.

À un instant t8, postérieur à l'instant t7, le circuit maître 21 cesse d'émettre son signal d'horloge CLK en ramenant ce signal CLK à l'état bas. Cette dernière commutation du signal CLK de l'état haut vers l'état bas marque la fin de la transmission de la trame d'acquittement.

À un instant t9, postérieur à l'instant t8, le signal BioMCU_BUSY est commuté de l'état haut vers l'état bas par le circuit esclave 22. Ce passage à l'état bas du signal BioMCU_BUSY a pour but de signifier au circuit maître 21 que le circuit esclave 22 est occupé à exécuter des opérations lui permettant de générer la trame de réponse (non représentée en figure 4).

À un instant t10, postérieur à l'instant t9 d'une durée fixée par le circuit maître 21, le signal SE_BUSY est commuté de l'état haut vers l'état bas par le circuit maître 21. L'instant t10 marque la fin de la phase de transmission de commande 31 (figure 3). Le passage à l'état bas du signal SE_BUSY s'accompagne donc, de préférence, d'une commutation du circuit maître 21 en mode basse consommation dans l'attente d'une phase de transmission de réponse initiée par le circuit esclave 22. En d'autres termes, le circuit maître 21 est mis en mode de veille après avoir transmis une commande au circuit esclave 22.

Le chronogramme de la vue B comprend des éléments communs avec le chronogramme de la vue A. Ces éléments ne seront pas à nouveau détaillés ci-après. Le chronogramme de la vue B diffère du chronogramme de la vue A principalement en ce que le chronogramme de la vue B comporte des instants successifs t2' à t9' intercalés entre l'instant t9 et l'instant t10. L'instant t9 est ainsi séparé de l'instant t10 par une durée permettant l'échange de la donnée de commande entre les circuits 21 et 22.

À l'instant t2', postérieur à l'instant t9, le signal BioMCU_BUSY est commuté de l'état bas vers l'état haut par le circuit esclave 22. Ce passage à l'état haut du signal BioMCU_BUSY a pour but de signifier au circuit maître 21 que le circuit esclave 22 est prêt à recevoir une trame de données de commande.

À un instant t3', postérieur à l'instant t2', le circuit maître 21 commence à émettre son signal d'horloge. La première commutation du signal CLK de l'état bas vers l'état haut marque le début de la transmission de la trame de données de commande (command data). À chaque commutation vers l'état haut du signal CLK, un nouveau bit de la trame de données de commande est transmis vers le circuit esclave 22. La trame de données de commande est transmise depuis le circuit maître 21 vers le circuit esclave 22. La transmission de cette trame de données de commande correspond donc, comme exposé en relation avec la figure 2, à la transmission du signal MOSI sur le deuxième conducteur 24B de la liaison 24.

À un instant t4', postérieur à l'instant t3', le circuit maître 21 cesse d'émettre son signal d'horloge CLK en ramenant ce signal CLK à l'état bas. Cette dernière commutation du signal CLK de l'état haut vers l'état bas marque la fin de la transmission de la trame de données de commande.

L'évolution des signaux SE_BUSY, BioMCU_BUSY, CLK et DATA aux instants successifs t5', t6', t7', t8' et t9' est ensuite similaire à ce qui a été exposé précédemment pour les instants successifs t5, t6, t7, t8 et t9, respectivement. La trame d'acquittement (ack) transmise entre les instants t7' et t8' et la trame d'acquittement transmise entre les instants t7 et t8 peuvent néanmoins posséder un contenu différent.

Selon un mode de mise en œuvre préféré, chaque trame d'en-tête de commande comporte :
un premier octet correspondant à un identifiant de la commande à exécuter par le circuit esclave 22 ;
un deuxième octet correspondant à une énergie (power budget) fournie par le champ électromagnétique EMF (figure 1), autrement dit une énergie susceptible d'être allouée à l'environnement biométrique pour l'exécution de ses opérations, ou à une puissance disponible ;
un troisième octet correspondant à une valeur de durée restante (time budget) d'activité du dispositif 2 (figure 1), autrement dit une durée susceptible d'être allouée à l'environnement biométrique pour l'exécution de ses opérations ;
un quatrième octet permettant d'indiquer, au deuxième circuit 22, si la commande transmise par le premier circuit 21 constitue une nouvelle commande ou une instruction de poursuite d'exécution d'une commande précédente ;
deux octets correspondant à une longueur de données à transmettre ; et
deux autres octets correspondant à un résultat d'un algorithme de contrôle de redondance cyclique (Cyclic Redundancy Check - CRC).

La valeur du deuxième octet est, de préférence, représentative d'une intensité d'un courant électrique d'alimentation du dispositif 2 à partir du champ électromagnétique EMF émis par le terminal 1 (figure 1). Une macrocellule du premier circuit 21 adapte alors la fréquence de fonctionnement de ce premier circuit 21 en fonction de cette estimation d'intensité. Le premier circuit 21 peut transmettre la valeur d'énergie disponible à un autre circuit ne disposant pas d'une telle macrocellule, par exemple le deuxième circuit 22, afin de permettre à ce deuxième circuit 22 d'adapter sa fréquence de fonctionnement selon l'énergie qui peut lui être délivrée. On optimise ainsi la fréquence de fonctionnement du deuxième circuit 22 en fonction de l'énergie, ici de l'intensité électrique, pouvant être allouée à ce deuxième circuit 22.

Selon ce mode de mise en œuvre, l'intensité issue du champ électromagnétique EMF capté par l'antenne 20 (figure 1) du dispositif 2 est estimée par un capteur du premier circuit 21. À titre d'exemple, l'intensité est comprise entre environ 2,5 mA et environ 17,5 mA par pas de 0,5 mA pour un module de la composante magnétique du champ EMF variant entre 0,5 A/m et 3 A/m, par pas de 0,1 A/m. Cette plage d'intensités comporte alors 32 valeurs possibles, ce qui permet de la coder sur 5 bits du deuxième octet pour la transmettre au deuxième circuit 22.

De la même façon, la valeur de durée restante est estimée par le premier circuit 21 et transmise au deuxième circuit 22.

En variante, le quatrième octet correspond à une valeur de tension (voltage budget) d'alimentation du dispositif 2 (figure 1), autrement dit une tension susceptible d'être allouée à l'environnement biométrique pour l'exécution de ses opérations. La valeur de tension permet au deuxième circuit 22 d'adapter une configuration interne. Le deuxième circuit 22 peut par exemple consommer un courant électrique plus ou moins important selon la valeur de tension qui lui est transmise par le premier circuit 21.

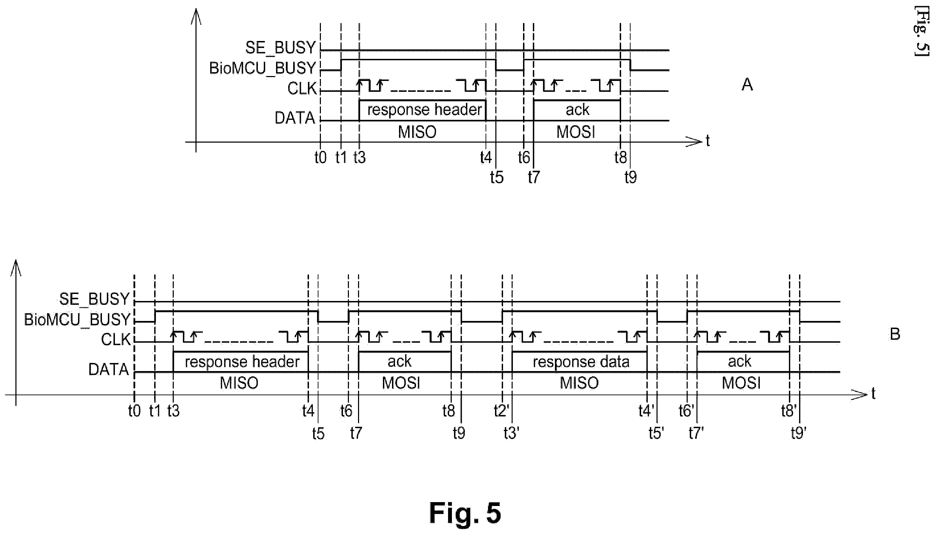

La figure 5 représente, par des vues A et B, des chronogrammes d'autres phases du mode de mise en œuvre du procédé de communication entre les circuits 21 et 22. Ces chronogrammes traduisent en particulier une évolution, en fonction du temps (t), des signaux SE_BUSY, BioMCU_BUSY, CLK et DATA.

Le chronogramme de la vue A correspond à une transmission de réponse 32 (figure 3) sans échange de données tandis que le chronogramme de la vue B correspond à une transmission de réponse 32 (figure 3) avec échange de données.

Les chronogrammes de la figure 5 comprennent des éléments communs avec les chronogrammes de la figure 4. Ces éléments ne seront pas à nouveau détaillés ci-après. Les chronogrammes de la figure 5 diffèrent des chronogrammes de la figure 4 principalement en ce que, dans les chronogrammes de la figure 5, c'est le circuit maître 21 qui est sorti, par le circuit esclave 22, du mode basse consommation. Les signaux sont en outre échangés, en figure 5, en sens inverse par rapport à ce qui a été exposé en relation avec la figure 4.

En vue A, à l'instant initial t0, tous les signaux SE_BUSY, BioMCU_BUSY, CLK et DATA sont à l'état bas (au niveau bas). On suppose, contrairement à ce qui a été exposé en relation avec la figure 4 :
que le circuit maître 21 est en mode basse consommation à cet instant t0 ; et
que le circuit esclave n'est pas en mode basse consommation à cet instant t0.

En figure 5, le signal SE_BUSY est maintenu à l'état bas durant toute la phase de transmission de réponse.

À l'instant t1, le signal BioMCU_BUSY est commuté de l'état bas vers un état haut par le circuit esclave 22. Le passage à l'état haut du signal BioMCU_BUSY a pour but de signifier au circuit maître 21 que le circuit esclave 22 souhaite lui transmettre une réponse. Le circuit maître 21 est alors sorti du mode basse consommation et entame une séquence de réveil durant laquelle ce circuit maître 21 effectue différentes opérations liées à sa sortie de veille. Le circuit maître 21 et le circuit esclave 22 sont alors tous deux maintenus hors du mode basse consommation jusqu'à la fin de la phase de transmission de réponse.

Entre les instants t3 et t4, le circuit maître 21 émet son signal d'horloge CLK et des bits de la trame d'en-tête de réponse (response header) sont transmis vers le circuit maître 21 à chaque période de ce signal CLK. La trame d'en-tête de réponse est transmise depuis le circuit esclave 22 vers le circuit maître 21. La transmission de cette trame d'en-tête de réponse correspond donc, comme exposé en relation avec la figure 2, à la transmission du signal MISO sur le deuxième conducteur 24B de la liaison 24.

Entre les instants t7 et t8, le circuit maître 21 émet son signal d'horloge CLK et des bits de la trame d'acquittement (ack) sont transmis vers le circuit esclave 22 à chaque période de ce signal CLK. La trame d'acquittement est transmise depuis le circuit maître 21 vers le circuit esclave 22. La transmission de cette trame d'acquittement correspond donc, comme exposé en relation avec la figure 2, à la transmission du signal MOSI sur le deuxième conducteur 24B de la liaison 24.

À l'instant t9, le signal BioMCU_BUSY est commuté de l'état haut vers l'état bas par le circuit esclave 22. Selon ce mode de mise en œuvre, le signal SE_BUSY est maintenu à l'état bas entre les instants t0 et t9. Le chronogramme de la vue A de la figure 5 ne comporte ainsi pas d'instant t10, contrairement aux chronogrammes précédemment décrits en relation avec la figure 4.

Le chronogramme de la vue B comprend des éléments communs avec le chronogramme de la vue A. Ces éléments ne seront pas à nouveau détaillés ci-après. Le chronogramme de la vue B diffère du chronogramme de la vue A principalement en ce que le chronogramme de la vue B comporte des instants successifs t2' à t9' postérieurs à l'instant t9. L'instant t9 est ainsi suivi d'une durée permettant l'échange de la donnée de réponse entre les circuits 21 et 22.

À l'instant t2' le signal BioMCU_BUSY est commuté de l'état bas vers l'état haut par le circuit esclave 22. Ce passage à l'état haut du signal BioMCU_BUSY a pour but de signifier au circuit maître 21 que le circuit esclave 22 est prêt à envoyer une trame de données de réponse.

À un instant t3', le circuit maître 21 commence à émettre son signal d'horloge. La première commutation du signal CLK de l'état bas vers l'état haut marque le début de la transmission de la trame de données de réponse (response data). À chaque commutation vers l'état haut du signal CLK, un nouveau bit de la trame de données de réponse est transmis vers le circuit maître 21. La trame de données de réponse est transmise depuis le circuit esclave 22 vers le circuit maître 21. La transmission de cette trame de données de réponse correspond donc, comme exposé en relation avec la figure 2, à la transmission du signal MISO sur le deuxième conducteur 24B de la liaison 24.

À un instant t4', le circuit maître 21 cesse d'émettre son signal d'horloge CLK en ramenant ce signal CLK à l'état bas. Cette dernière commutation du signal CLK de l'état haut vers l'état bas marque la fin de la transmission de la trame de données de réponse.

L'évolution des signaux SE_BUSY, BioMCU_BUSY, CLK et DATA aux instants successifs t5', t6', t7', t8' et t9' est ensuite similaire à ce qui a été exposé précédemment pour les instants successifs t5, t6, t7, t8 et t9, respectivement. La trame d'acquittement (ack) transmise entre les instants t7' et t8' et la trame d'acquittement transmise entre les instants t7 et t8 peuvent néanmoins posséder un contenu différent. La trame d'acquittement transmise entre les instants t7' et t8' et la trame d'acquittement transmise entre les instants t7 et t8 sont ici, contrairement à ce qui a été exposé en relation avec la figure 4, émises par le circuit maître 21 à destination du circuit esclave 22.

À l'instant t9', le signal BioMCU_BUSY est commuté de l'état haut vers l'état bas par le circuit esclave 22. Selon ce mode de mise en œuvre, le signal SE_BUSY est maintenu à l'état bas entre les instants t0 et t9'. Le chronogramme de la vue B de la figure 5 ne comporte ainsi pas d'instant t10, contrairement aux chronogrammes décrits en relation avec la figure 4.

Selon un mode de mise en œuvre préféré, chaque trame d'en-tête de réponse comporte :
deux premiers octets correspondant à un statut de la commande exécutée par le circuit esclave 22 ;
un deuxième octet permettant d'indiquer, au circuit maître 21, si le circuit esclave 22 s'attend à recevoir une nouvelle commande ou une commande de même identifiant dont il est censé poursuivre l'exécution ;
un troisième octet correspondant à une valeur de fréquence maximale de transmission, sur la liaison 24 (figures 1 et 2), compatible avec l'énergie susceptible d'être allouée par le circuit maître 21 à l'environnement biométrique ;
deux octets correspondant à une longueur de données à transmettre ; et
deux autres octets correspondant à un résultat d'un algorithme de contrôle de redondance cyclique (Cyclic Redundancy Check - CRC).

La valeur du troisième octet de la trame de réponse permet notamment au circuit maître 21 d'adapter la fréquence de transmission sur la liaison en fonction de variations de l'énergie issue du champ électromagnétique. Une augmentation de l'énergie peut, en particulier, conduire à une augmentation de la fréquence de transmission. À l'opposé, une diminution de l'énergie peut conduire à une diminution de la fréquence de transmission.

Selon ce mode de mise en œuvre, une transmission de réponse par le circuit esclave 22 est précédée par une transmission de commande par le circuit maître 21. Différents cas d'enchaînements alternatifs de commandes et de réponses sont ainsi possibles, selon que ces commandes et/ou ces réponses comportent ou non des données, la mise en œuvre de ces différents cas étant à la portée de l'homme du métier à partir des indications ci-dessus.

Selon un mode de mise en œuvre préféré, on prévoit des opérations de gestion d'erreur en cas de dysfonctionnement affectant le circuit esclave 22. En fonctionnement normal, chaque mise à l'état haut du signal SE_BUSY est censée s'accompagner, quelques instants plus tard, d'une mise à l'état haut du signal BioMCU_BUSY. Une temporisation est lancée au moment de la commutation vers l'état haut du signal SE_BUSY. Dans le cas où le circuit maître 21 constate que le signal BioMCU_BUSY n'a pas été commuté vers l'état haut avant expiration de la temporisation, on considère que le circuit esclave 22 ne répond pas.

Toujours selon ce mode de mise en œuvre préféré, une ou plusieurs autres temporisations sont lancées après la transmission d'une en-tête de commande, d'une en-tête de réponse, d'une commande et/ou d'une réponse. Dans le cas où cette ou ces autres temporisations expirent avant que la trame d'acquittement associée soit transmise, on considère que le circuit esclave 22 ne répond pas.

En outre, si la trame d'acquittement ne contient pas la valeur attendue par le circuit destinataire de cette trame, on peut faire en sorte que la trame précédente soit retransmise. Dans le cas où plusieurs trames d'acquittement successives ne contiennent pas la valeur attendue, par exemple au bout de trois trames d'acquittement successives ne correspondant pas à la trame attendue par le circuit destinataire, on peut par ailleurs considérer que le circuit esclave 22 ne répond pas.

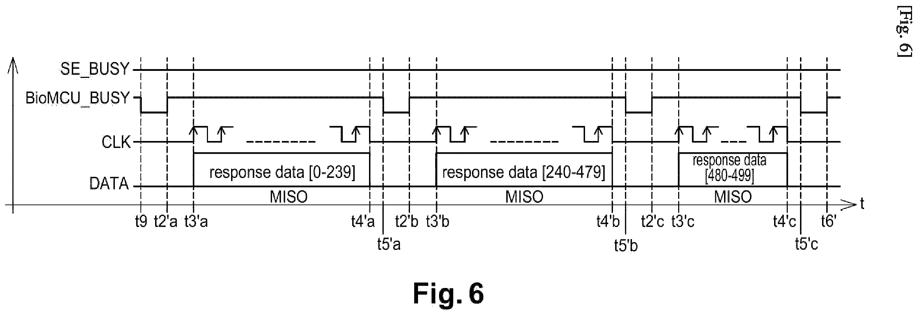

La figure 6 est un chronogramme d'encore une autre phase du mode de mise en œuvre du procédé de communication entre les circuits 21 et 22. Ce chronogramme traduit en particulier une évolution, en fonction du temps (t), des signaux SE_BUSY, BioMCU_BUSY, CLK et DATA.

Le chronogramme de la figure 6 correspond à une transmission de réponse 32 (figure 3) avec échange de données, dans une situation où la longueur ou taille de la donnée de réponse, c'est-à-dire le nombre d'octets de cette donnée, excède la longueur limite d'une trame. Cette situation correspond, par exemple, à un cas où le circuit esclave 22 transmet au circuit maître 21 une donnée représentative de résultats d'analyse d'une empreinte digitale dont la longueur excède la longueur limite d'une trame.

On suppose, pour le procédé de communication mis en œuvre sur la liaison 24, que la longueur limite d'une trame est égale à 240 octets (bytes). Lorsque la longueur de la donnée de réponse à transmettre est supérieure à 240 octets, on divise cette donnée en autant de mots que nécessaire, chaque mot n'excédant pas 240 octets. La transmission de la donnée de réponse revient alors à effectuer, durant une même phase de réponse 32 (figure 3), des transmissions successives de trames correspondant chacune à un mot de la donnée de réponse.

La figure 6 illustre, à titre d'exemple, une situation dans laquelle le circuit esclave 22 transmet, au circuit maître 21, une donnée de réponse comportant 500 octets. Cette donnée comportant 500 octets est, toujours dans cet exemple, découpée en :
un premier mot (response data [0-239]) constitué des 240 premiers octets de la donnée de réponse ;
un deuxième mot (response data [240-479]) constitué des 240 octets suivants de la donnée de réponse ; et
un troisième mot (response data [480-499]) constitué des 20 derniers octets de la donnée de réponse.

Le chronogramme de la figure 6 comprend des éléments communs avec le chronogramme de la vue B de la figure 5. Ces éléments ne seront pas à nouveau détaillés ci-après. Le chronogramme de la figure 6 diffère du chronogramme de la vue B de la figure 5 principalement en ce que les opérations séparant les instants t2' à t6' exposées en relation avec la figure 5 sont, en figure 6, répétées à plusieurs reprises. En particulier, des instants successifs t2'a, t3'a, t4'a, t5'a, t2'b, t3'b, t4'b, t5'b, t2'c, t3'c, t4'c et t5'c sont intercalés entre les instants t9 et t6'.

À l'instant t2'a, analogue à l'instant t2' de la figure 5, le signal BioMCU_BUSY est commuté de l'état bas vers l'état haut par le circuit esclave 22. Ce passage à l'état haut du signal BioMCU_BUSY a pour but de signifier au circuit maître 21 que le circuit esclave 22 est prêt à envoyer une première trame contenant le premier mot de la donnée de réponse.

À l'instant t3'a, analogue à l'instant t3', le circuit maître 21 commence à émettre son signal d'horloge. La première commutation du signal CLK de l'état bas vers l'état haut marque le début de la transmission de la première trame. À chaque commutation vers l'état haut du signal CLK, un nouveau bit de la première trame, donc du premier mot, est transmis vers le circuit maître 21. La première trame est transmise depuis le circuit esclave 22 vers le circuit maître 21. La transmission de cette première trame correspond donc, comme exposé en relation avec la figure 2, à la transmission du signal MISO sur le deuxième conducteur 24B de la liaison 24.

À l'instant t4'a, analogue à l'instant t4', le circuit maître 21 cesse d'émettre son signal d'horloge CLK en ramenant ce signal CLK à l'état bas. Cette dernière commutation du signal CLK de l'état haut vers l'état bas marque la fin de la transmission de la première trame.

À l'instant t5'a, analogue à l'instant t5', le signal BioMCU_BUSY est commuté à l'état bas. Le circuit esclave 22 indique ainsi au circuit maître 21 qu'il n'est prêt ni à émettre, ni à recevoir.

Les signaux SE_BUSY, BioMCU_BUSY, CLK et DATA évoluent ensuite aux instants successifs t2'b, t3'b, t4'b et t5'b postérieurs à l'instant t5'a, de façon similaire à ce qui a été exposé précédemment pour les instants successifs t2'a, t3'a, t4'a et t5'a, respectivement, à la différence près que les instants t3'b et t4'b encadrent la transmission d'une deuxième trame contenant le deuxième mot de la donnée de réponse. De façon analogue, les signaux SE_BUSY, BioMCU_BUSY, CLK et DATA évoluent ensuite aux instants successifs t2'c, t3'c, t4'c et t5'c postérieurs à l'instant t5'b, de façon similaire à ce qui a été exposé précédemment pour les instants successifs t2'a, t3'a, t4'a et t5'a, respectivement, à la différence près que les instants t3'c et t4'c encadrent la transmission d'une troisième trame contenant le troisième mot de la donnée de réponse.

Pendant une communication sans contact, on cherche à faire en sorte que le premier circuit 21, le deuxième circuit 22 et le capteur biométrique 23 consomment le moins d'énergie possible. De préférence, l'environnement biométrique, c'est-à-dire le deuxième circuit 22 et le capteur biométrique 23, ne sont ainsi sortis du mode basse consommation que dans deux cas :
lors d'une phase de démarrage initial, pendant laquelle la carte 2 (figure 1) est rapprochée du terminal 1 (figure 1) afin que cette carte 2 soit alimentée par ce terminal 1 ; et
entre le début d'une phase de transmission de commande 31 (figure 3) et la fin de la phase de transmission de réponse 32 (figure 3) associée. En dehors de ces deux cas, l'environnement biométrique est mis en veille après chaque fin de phase de transmission de réponse 32.

En variante, l'environnement biométrique n'est alimenté que lorsqu'il est sollicité par le premier circuit 21. L'environnement biométrique est alors démarré sur sollicitation du premier circuit 21 et la transmission d'une première phase de commande est initiée par le premier circuit 21 dès que le signal BioMCU_BUSY est commuté vers l'état bas.

Selon un mode de mise en œuvre, une interruption se produit parfois pendant une période d'activité de l'environnement biométrique, entre la transmission d'une commande et la transmission de la réponse associée. Cette interruption peut, en pratique, apparaître en cas de demande d'extension de temps (Wait Time eXtension - WTX). Une telle demande d'extension de temps intervient notamment lorsque la carte 2 a besoin que le terminal 1 lui accorde un délai supplémentaire avant de stopper l'émission du champ, donc de couper l'alimentation de cette carte 2.

Pour des applications bancaires de paiement sans contact, la demande d'extension de temps est typiquement envoyée au bout d'environ 38 ms, au maximum :
après la réception d'une commande d'unité de données du protocole d'application (Application Protocol Data Unit - APDU) ; ou
après la réception de la dernière demande d'extension de temps.

Selon un mode de mise en œuvre préféré, une temporisation ou minuterie est activée par le premier circuit 21 après chaque réception d'APDU ou de demande d'extension de temps. Une expiration de cette temporisation permet alors d'indiquer, au premier circuit 21, un moment opportun pour effectuer la demande d'extension de temps suivante. Cette temporisation est, dans cet exemple, initialement fixée à une valeur inférieure à 38 ms.

Si cette temporisation expire à un moment où le deuxième circuit 22 n'est pas en mode basse consommation, autrement dit si cette temporisation expire pendant que le deuxième circuit 22 est actif, le premier circuit 21 transmet alors à ce deuxième circuit 22 une commande d'interruption. Cette commande d'interruption vise à interrompre des opérations exécutées par le deuxième circuit 22 et à commuter temporairement ce deuxième circuit 22 en mode basse consommation.

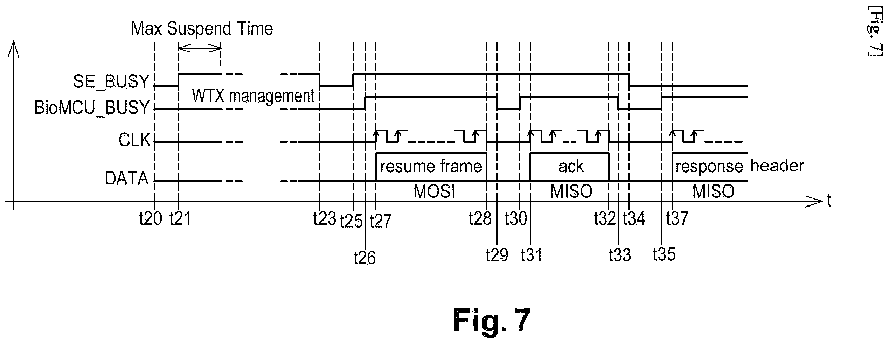

La figure 7 est un chronogramme d'encore une autre phase du mode de mise en œuvre du procédé de communication entre les circuits 21 et 22, en cas de transmission d'une commande d'interruption. Ce chronogramme traduit en particulier une évolution, en fonction du temps (t), des signaux SE_BUSY, BioMCU_BUSY, CLK et DATA.

Le chronogramme de la figure 7 correspond à une situation dans laquelle la temporisation expire pendant que le circuit esclave 22 est actif. Le circuit maître 21 va donc envoyer une commande d'interruption au circuit esclave 22 afin de mettre ce deuxième circuit en mode basse consommation.

On suppose, en figure 7, que les signaux SE_BUSY, BioMCU_BUSY, CLK et DATA sont initialement tous à l'état bas à un instant t20. On suppose, en outre, que cet instant t20 est intercalé entre une phase de transmission de commande et une phase de transmission de réponse. Le signal BioMCU_BUSY est ainsi censé passer à l'état haut après l'instant t20 pour initier une phase de transmission de réponse. En figure 7, contrairement à ce que l'on pourrait attendre (puisque l'on est censé débuter une phase de transmission de réponse, c'est la montée du signal BioMCU_BUSY qui est normalement attendue), c'est le signal SE_BUSY qui est mis à l'état haut après l'instant t20.

À un instant t21, postérieur à l'instant t20, le signal SE_BUSY est ainsi commuté de l'état bas vers l'état haut par le circuit maître 21. Ce passage à l'état haut du signal SE_BUSY a pour but de signifier au circuit esclave 22 que le circuit maître 21 souhaite l'interrompre.

À partir de l'instant t21, le circuit esclave 22 détecte et exécute la commande d'interruption. Ce circuit esclave 22 est commuté en mode basse consommation. Au bout d'une durée, notée Max Suspend Time, des opérations (WTX management) de gestion de la demande d'extension de temps sont alors effectuées par le circuit maître 21. La durée Max Suspend Time est suffisamment importante pour garantir que le circuit esclave 22 a bien été commuté en mode basse consommation avant le démarrage des opérations de gestion de la demande d'extension de temps. Le circuit esclave 22 est ainsi mis en veille lors d'une communication du circuit maître 21 avec l'extérieur de la carte 2 (figure 1).

À un instant t23, postérieur à l'instant t21, le signal SE_BUSY est commuté de l'état haut vers l'état bas par le circuit maître 21. L'instant t23 marque la fin de la gestion de la demande d'extension de temps par ce circuit maître 21. La commutation du signal SE_BUSY vers l'état bas provoque la sortie du mode basse consommation du circuit esclave 22. Cela revient à transmettre au circuit esclave 22 une commande de reprise des opérations exécutées par ce circuit esclave 22 avant la transmission de la commande d'interruption.

Le circuit esclave 22 est alors sorti du mode basse consommation et entame une séquence de réveil durant laquelle ce circuit esclave 22 effectue différentes opérations liées à sa sortie de veille. Le signal BioMCU_BUSY est maintenu à l'état bas durant toutes ces opérations.

À un instant t25, postérieur à l'instant t23, le signal SE_BUSY est commuté de l'état bas vers l'état haut par le circuit maître 21. Cela indique que le circuit maître 21 souhaite transmettre une trame de redémarrage au circuit esclave 22.

À un instant t26, postérieur à l'instant t25, le signal BioMCU_BUSY est commuté de l'état bas vers l'état haut par le circuit esclave 22. Ce passage à l'état haut du signal BioMCU_BUSY, qui succède ici au passage à l'état haut du signal SE_BUSY, a pour but de signifier au circuit maître 21 que le circuit esclave 22 est prêt à recevoir la trame de redémarrage.

À un instant t27, postérieur à l'instant t26, le circuit maître 21 émet son signal d'horloge CLK. La première commutation du signal CLK de l'état bas vers l'état haut marque le début de la transmission de la trame de redémarrage (resume frame). À chaque commutation vers l'état haut du signal CLK, un nouveau bit de la trame de redémarrage est transmis vers le circuit esclave 22. La trame de redémarrage est transmise depuis le circuit maître 21 vers le circuit esclave 22. La transmission de cette trame de redémarrage correspond donc, comme exposé en relation avec la figure 2, à la transmission du signal MOSI sur le deuxième conducteur 24B de la liaison 24.

Selon un mode de mise en œuvre préféré, la trame de redémarrage comporte des octets analogues à ceux d'une trame d'en-tête de commande comme exposé en relation avec la figure 4. En particulier, la trame de redémarrage comporte le troisième octet correspondant à la valeur de durée restante (time budget) allouée à l'environnement biométrique pour l'exécution de ses opérations. Cette valeur de durée restante correspond plus particulièrement, toujours selon ce mode de mise en œuvre préféré, à une durée restante de la temporisation adaptée à prévoir la demande d'extension de temps suivante. Cela permet ainsi avantageusement au circuit maître 21 de communiquer au circuit esclave 22 la durée dont dispose ce circuit esclave 22 pour effectuer ses opérations avant la prochaine demande d'extension de temps.

À un instant t28, postérieur à l'instant t27, le circuit maître 21 cesse d'émettre son signal d'horloge CLK. Cet instant t28 marque ainsi la fin de la transmission de la trame de redémarrage.

À un instant t29, postérieur à l'instant t28, le signal BioMCU_BUSY est commuté de l'état haut vers l'état bas par le circuit esclave 22. Ce passage à l'état bas du signal BioMCU_BUSY a pour but de signifier au circuit maître 21 que le circuit esclave 22 est occupé à exécuter des opérations lui permettant de générer la trame d'acquittement.

À un instant t30, postérieur à l'instant t29, le signal BioMCU_BUSY est commuté de l'état bas vers l'état haut par le circuit esclave 22. Ce passage à l'état haut du signal BioMCU_BUSY a pour but de signifier au circuit maître 21 que le circuit esclave 22 est prêt à transmettre la trame d'acquittement, en réponse à la trame de redémarrage précédemment reçue.

À un instant t31, postérieur à l'instant t30, le circuit maître 21 commence à émettre son signal d'horloge et la trame d'acquittement est transmise par le circuit esclave 22 vers le circuit maître 21. La transmission de cette trame d'acquittement correspond donc, comme exposé en relation avec la figure 2, à la transmission du signal MISO sur le deuxième conducteur 24B de la liaison 24.

À un instant t32, postérieur à l'instant t31, le circuit maître 21 cesse d'émettre son signal d'horloge CLK. Cet instant t32 marque ainsi la fin de la transmission de la trame d'acquittement.

À un instant t33, postérieur à l'instant t32, le signal BioMCU_BUSY est commuté de l'état haut vers l'état bas par le circuit esclave 22. Ce passage à l'état bas du signal BioMCU_BUSY a pour but de signifier au circuit maître 21 que le circuit esclave 22 est occupé à continuer l'exécution des opérations lui permettant de générer la trame de réponse.

À un instant t34, postérieur à l'instant t33, le signal SE_BUSY est commuté de l'état haut vers l'état bas par le circuit maître 21. L'instant t34 marque la fin de la transmission de la trame de redémarrage et de la trame d'acquittement associée. Le passage à l'état bas du signal SE_BUSY s'accompagne, de préférence, d'une commutation du circuit maître 21 en mode basse consommation dans l'attente de la phase de transmission de réponse initiée par le circuit esclave 22.

À un instant t35, postérieur à l'instant t34, le signal BioMCU_BUSY est commuté de l'état bas vers l'état haut par le circuit esclave 22. Ce passage à l'état haut du signal BioMCU_BUSY a pour but de signifier au circuit maître 21 que le circuit esclave 22 souhaite lui transmettre une réponse. Le circuit maître 21 est alors sorti du mode basse consommation et entame une séquence de réveil durant laquelle ce circuit maître 21 effectue différentes opérations liées à sa sortie de veille. Le signal SE_BUSY est maintenu à l'état bas durant toutes ces opérations.

On suppose alors qu'aucune commande d'interruption n'est envoyée au circuit esclave 22 par le circuit maître 21.

À un instant t37, postérieur à l'instant t35, le circuit maître 21 émet son signal d'horloge CLK et des bits de la trame d'en-tête de réponse (response header) sont transmis vers le circuit esclave 22 à chaque période de ce signal CLK. La trame d'en-tête de réponse est transmise depuis le circuit esclave 22 vers le circuit maître 21. La transmission de cette trame d'en-tête de réponse correspond donc, comme exposé en relation avec la figure 2, à la transmission du signal MISO sur le deuxième conducteur 24B de la liaison 24.

Selon ce mode de mise en œuvre, une situation de concurrence ou de compétition (race case), entre la commande d'interruption et la demande de transmission de trame de réponse, est parfois susceptible de se produire. On peut notamment assister à une telle situation lorsque le circuit maître 21 commande l'interruption du circuit esclave 22 approximativement au moment où le circuit esclave 22 s'apprête à transmettre une réponse. Cela correspond, par exemple, à une montée quasi-simultanée des signaux SE_BUSY et BioMCU_BUSY à l'instant t21.

Dans ce cas, la priorité est donnée à la commande d'interruption transmise par le circuit maître 21. Le signal BioMCU_BUSY est alors commuté vers l'état bas avant expiration de la durée Max Suspend Time. La commande d'interruption est ensuite prise en compte par le circuit esclave 22 qui passe en mode veille pour permettre la gestion de la demande d'extension de temps par le circuit maître 21.

Toujours selon ce mode de mise en œuvre, la commutation vers l'état haut du signal SE_BUSY correspond donc :
à l'envoi d'une commande, lorsque le circuit esclave 22 est en mode veille ; ou
à l'envoi d'une commande d'interruption, lorsque le circuit maître 21 est en attente d'une réponse de la part du circuit esclave 22.

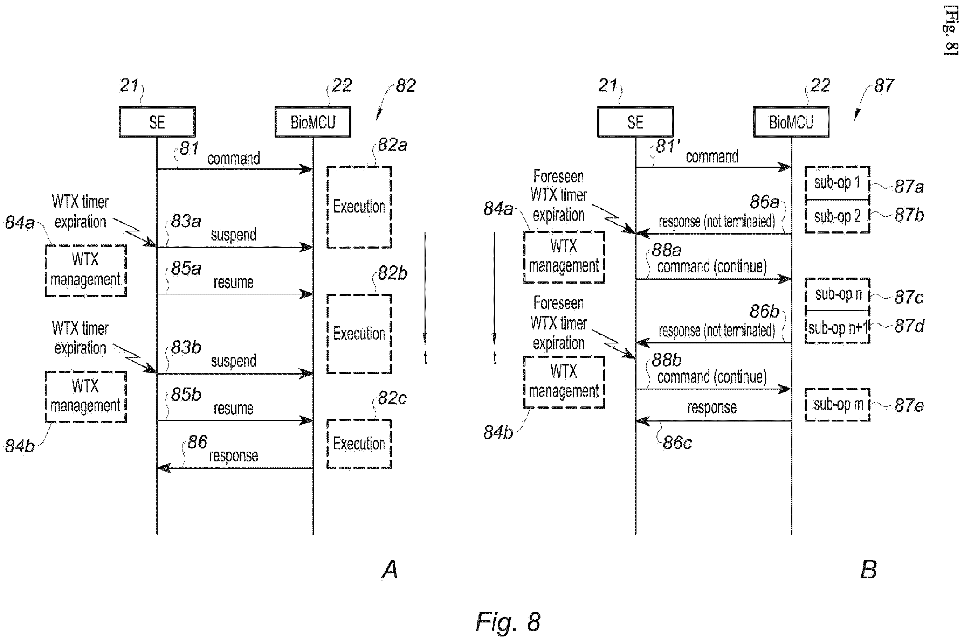

La figure 8 représente, par des vues A et B, des diagrammes d'enchaînement d'autres étapes du mode de mise en œuvre du procédé de communication. En particulier, la figure 8 illustre un déroulement d'étapes ou phases d'une communication entre les circuits 21 et 22 en fonction du temps (t) .

Selon ce mode de mise en œuvre, le deuxième circuit 22 effectue deux types d'opérations ou tâches :
des opérations ou tâches dites interruptibles, autrement dit des opérations dont l'exécution peut être suspendue à tout moment puis être reprise sans incidence sur le fonctionnement ; et
des opérations ou tâches dites non interruptibles, autrement dit des opérations dont l'exécution ne peut pas être suspendue tant qu'elle n'a pas été menée à son terme.

Un exemple d'opération interruptible est une analyse, par le deuxième circuit 22, d'une image obtenue par le capteur d'empreintes digitales 23 afin d'en extraire des minuties, c'est-à-dire de réaliser une empreinte digitale réduite. Un exemple d'opération non interruptible est une communication entre le deuxième circuit 22 et le capteur d'empreintes digitales 23.

La vue A de la figure 8 représente, de façon schématique, un diagramme de communication entre le premier circuit 21 et le deuxième circuit 22 dans un cas où ce deuxième circuit 22 exécute une opération interruptible 82. Le premier circuit 21 transmet, au deuxième circuit 22, une commande (flèche 81, command) d'exécution de cette opération interruptible 82. Le deuxième circuit 22 débute alors l'exécution (bloc 82a, Execution) de l'opération interruptible 82 commandée par le premier circuit 21.

Au bout d'une durée correspondant à l'expiration (WTX timer expiration) de la temporisation permettant de prévoir la prochaine demande d'extension de temps, une commande d'interruption (flèche 83a, suspend) est transmise vers le deuxième dispositif 22 comme exposé en relation avec la figure 7. Cela a pour effet d'interrompre l'exécution 82a, par le deuxième circuit 22, de l'opération interruptible 82 et de permettre au premier circuit 21 de gérer (bloc 84a, WTX management) la demande d'extension de temps. Une commande de redémarrage (flèche 85a, resume) est alors transmise au deuxième circuit 22. Ce deuxième circuit 22 reprend alors l'exécution (bloc 82b, Execution) de l'opération interruptible 82.

Au bout d'une durée correspondant à l'expiration (WTX timer expiration) de la temporisation permettant de prévoir la prochaine demande d'extension de temps, une nouvelle commande d'interruption (flèche 83b, suspend) est transmise vers le deuxième dispositif 22. Cela a pour effet d'interrompre l'exécution 82b, par le deuxième circuit 22, de l'opération interruptible 82 et de permettre au premier circuit 21 de gérer (bloc 84b, WTX management) la demande d'extension de temps. Une nouvelle commande de redémarrage (flèche 85b, resume) est alors transmise au deuxième circuit 22. Ce deuxième circuit 22 reprend alors l'exécution (bloc 82c, Execution) de l'opération interruptible 82.

Une fois l'exécution 82c de l'opération interruptible 82 achevée, une réponse (flèche 86, response) est transmise par le deuxième circuit 22. Cette réponse contient, par exemple, des données de sortie de l'exécution 82a, 82b, 82c de l'opération interruptible 82.

On suppose, en vue A, que seules deux interruptions, issues chacune de la nécessité de gérer une demande d'extension de temps, ont lieu pendant l'exécution de l'opération interruptible. Il est toutefois entendu que, en pratique, l'opération interruptible peut être suspendue par un nombre quelconque d'interruptions, l'implémentation d'une telle variante étant à la portée de l'homme du métier à partir des indications fournies dans cette description.

La vue B de la figure 8 représente, de façon schématique, un diagramme de communication entre le premier circuit 21 et le deuxième circuit 22 dans un cas où ce deuxième circuit 22 exécute une opération 87, par exemple une opération interruptible pouvant être divisée ou scindée en plusieurs sous-opérations ou sous-tâches non interruptibles. On suppose, selon ce mode de mise en œuvre, que chaque sous-opération peut être exécutée pendant une durée inférieure à la durée séparant deux demandes d'extension de temps successives.

Le premier circuit 21 transmet, au deuxième circuit 22, une commande (flèche 81', command) d'exécution de l'opération 87. Le deuxième circuit 22 exécute alors, dans l'exemple de la vue B, une première sous-opération non interruptible (bloc 87a, sub-op 1) puis une deuxième sous-opération (bloc 87b, sub-op 2) non interruptible de l'opération 87 commandée par le premier circuit 21.

Au bout d'une durée précédant l'expiration prévue (Foreseen WTX timer expiration) de la temporisation permettant de prévoir la prochaine demande d'extension de temps, une réponse (flèche 86a, response (not terminated)) est transmise vers le premier dispositif 21. Cela a pour effet de permettre au premier circuit 21 de gérer (bloc 84a, WTX management) la demande d'extension de temps. Une commande de redémarrage (flèche 88a, command (continue)) est alors transmise au deuxième circuit 22. Ce deuxième circuit 22 exécute alors, toujours dans l'exemple de la vue B, une troisième sous-opération non interruptible (bloc 87c, sub-op n) puis une quatrième sous-opération non interruptible (bloc 87d, sub-op n+1) de l'opération 87 commandée par le premier circuit 21.

Au bout d'une durée précédant l'expiration prévue (Foreseen WTX timer expiration) de la temporisation permettant de prévoir la demande d'extension de temps suivante, une nouvelle réponse (flèche 86b, response (not terminated)) est transmise vers le premier dispositif 21. Cela a pour effet de permettre au premier circuit 21 de gérer (bloc 84b, WTX management) la deuxième demande d'extension de temps. Une nouvelle commande de redémarrage (flèche 88b, command (continue)) est alors transmise au deuxième circuit 22. Ce deuxième circuit 22 exécute alors, encore dans l'exemple de la vue B, une cinquième et dernière sous-opération non interruptible (bloc 87e, sub-op m) achevant l'opération 87 commandée par le premier circuit 21.

On suppose, en vue B, que seules deux interruptions, issues chacune de la nécessité de gérer une demande d'extension de temps, ont lieu pendant l'exécution de l'opération. Il est toutefois entendu que, en pratique, l'opération peut être suspendue par un nombre quelconque d'interruptions, l'implémentation d'une telle variante étant à la portée de l'homme du métier à partir des indications fournies dans cette description.

Selon un mode de mise en œuvre préféré, la commande 81' et les commandes de redémarrage 88a et 88b contiennent la valeur d'énergie disponible et la valeur de durée restante allouées au deuxième circuit 22 jusqu'à la gestion d'extension de temps suivante. Cela permet avantageusement au deuxième circuit 22 de calculer un nombre d'opérations non interruptibles pouvant être exécutées avant la prochaine interruption en fonction, notamment, de l'énergie disponible.

Il est ainsi possible d'élaborer une stratégie d'exécution des opérations par le deuxième circuit 22. Dans un cas, en particulier, d'une opération comportant des sous-opérations non interruptibles, ce deuxième circuit 22 est en capacité de décider combien de sous-opérations non interruptibles sont susceptibles d'être réalisées avant la prochaine interruption. Cela permet de limiter un risque d'interruption lors d'une exécution d'une sous-opération non interruptible. On optimise ainsi également l'exécution des sous-opérations non interruptibles d'une opération donnée.

Divers modes de réalisation et variantes ont été décrits. L'homme de l'art comprendra que certaines caractéristiques de ces divers modes de réalisation, modes de mise en œuvre et variantes pourraient être combinées, et d'autres variantes apparaîtront à l'homme de l'art. Ce qui a été décrit en relation avec des modes de réalisation et modes de mise en œuvre dans lesquels le signal de synchronisation CLK est par défaut au niveau bas par défaut, l'acquisition de données s'effectuant sur les fronts montants du signal CLK, se transpose à un niveau et à des fronts inverses (niveau haut et fronts descendants).

Par ailleurs, ce qui a été décrit en particulier en relation avec des modes de réalisation et modes de mise en œuvre dans lesquels le capteur 23 est un capteur d'empreintes digitales s'applique plus généralement à d'autres types de capteurs 23 biométriques, par exemple des capteurs de reconnaissance faciale.

Enfin, la mise en œuvre pratique des modes de réalisation, modes de mise en œuvre et variantes décrits est à la portée de l'homme du métier à partir des indications fonctionnelles données ci-dessus. En particulier, ce qui est exposé plus particulièrement en relation avec un exemple d'application à une communication entre un microcontrôleur exécutant des opérations sécurisées et un microcontrôleur biométrique s'applique plus généralement à toute communication entre un circuit ou dispositif maître et un circuit ou dispositif esclave.

## Revendications

1. Procédé de communication entre un premier élément (21) et au moins un deuxième élément (22) d'un même dispositif (2), dans lequel :
le premier élément transmet au deuxième élément une première information représentative d'une énergie (power budget) fournie par un champ électromagnétique (EMF) alimentant le dispositif ; et
le deuxième élément adapte sa fréquence de fonctionnement en fonction de la première information.

2. Procédé selon la revendication 1, dans lequel la première information est une intensité d'un courant électrique d'alimentation du dispositif (2) à partir du champ électromagnétique (EMF).

3. Procédé selon la revendication 1 ou 2, dans lequel la première information est évaluée par le premier élément (21) .

4. Procédé selon l'une quelconque des revendications 1 à 3, dans lequel :
le premier élément (21) transmet au deuxième élément (22) une deuxième information représentative d'une durée restante (time budget) d'activité du dispositif (2) ; et
le deuxième élément exécute un nombre d'opérations en fonction de la deuxième information.

5. Procédé selon la revendication 4, dans lequel la deuxième information est évaluée par le premier élément (21).

6. Procédé selon l'une quelconque des revendications 1 à 5, dans lequel :
le premier élément (21) transmet au deuxième élément (22) une troisième information représentative d'une tension (voltage budget) d'alimentation du dispositif (2) ; et
le deuxième élément adapte une configuration interne en fonction de cette troisième information.

7. Procédé selon la revendication 6, dans lequel la troisième information est évaluée par le premier élément (21).

8. Procédé selon l'une quelconque des revendications 1 à 7, dans lequel le premier élément (21) alimente le deuxième élément (22).

9. Procédé selon l'une quelconque des revendications 1 à 8, dans lequel le premier élément (21) est un circuit électronique sécurisé.

10. Procédé selon l'une quelconque des revendications 1 à 9, dans lequel le deuxième élément (22) est un microcontrôleur.

11. Procédé selon l'une quelconque des revendications 1 à 10, dans lequel le deuxième élément (22) est relié, de préférence connecté, à un capteur (23) d'empreintes digitales.

12. Procédé selon la revendication 11, dans lequel le capteur (23) d'empreintes digitales fait partie du dispositif (2).

13. Procédé selon la revendication 11 ou 12, dans lequel le premier élément (21) alimente le capteur (23) d'empreintes digitales.

14. Procédé selon l'une quelconque des revendications 1 à 13, dans lequel le dispositif (2) communique avec l'extérieur sans contact, par un signal radiofréquence, ou avec contact.

15. Dispositif (2) adapté à mettre en œuvre le procédé selon l'une quelconque des revendications 1 à 14.

16. Carte (2) de paiement adaptée à mettre en œuvre le procédé selon l'une quelconque des revendications 1 à 14.
